(19) Europäisches Patentamt
European Patent Office
Office européen des brevets

(11) Veröffentlichungsnummer: **0 350 755 A1**

# (12) EUROPÄISCHE PATENTANMELDUNG

(21) Anmeldenummer: **89112117.0**

(22) Anmeldetag: **03.07.89**

(51) Int. Cl.$^4$: **B01D 17/04 , C10G 33/04**

(30) Priorität: **11.07.88 DE 3823455**

(43) Veröffentlichungstag der Anmeldung:
**17.01.90 Patentblatt 90/03**

(84) Benannte Vertragsstaaten:
**AT BE CH DE ES FR GB GR IT LI NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Spei, Brigitte**
**Harffstrasse 129 a**
**D-4000 Düsseldorf 13(DE)**
Erfinder: **Wehle, Volker, Dr.**
**Alsenstrasse 7**
**D-5657 Haan(DE)**

## (54) Verfahren zur Spaltung von Oel-Wasseremulsionen unter Verwendung organischer Spaltprodukte und die Verwendung dieses Verfahrens.

(57) Offenbart wird ein Verfahren zur Spaltung von Öl-/Wasseremulsionen unter Verwendung organischer Spaltprodukte, die mittels einer Regelvorrichtung in optimaler Menge zugegeben werden, das dadurch gekennzeichnet ist, daß die Spaltungsreaktion unter Vermischen bei Temperaturen von 60 °C bis 90 °C durchgeführt wird, sowie die Verwendung dieses Verfahrens.

Abb.1

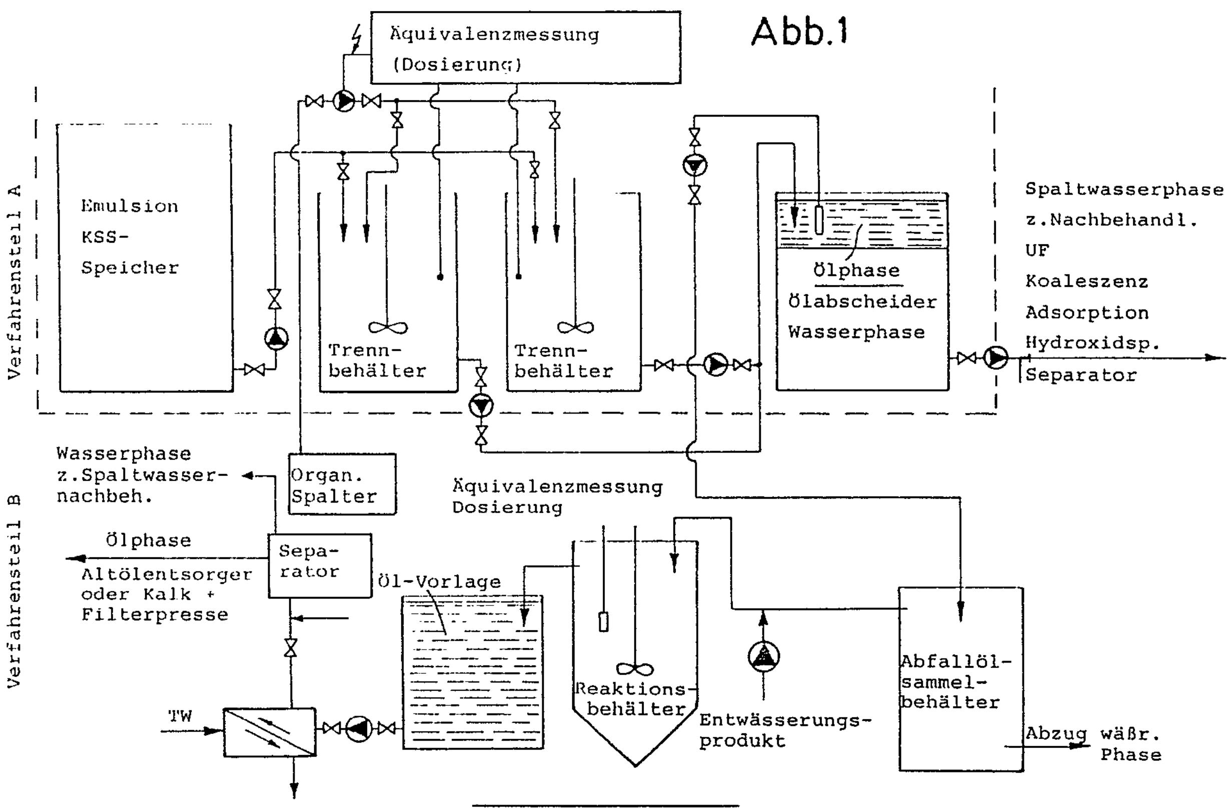


EP 0 350 755 A1

## Verfahren zur Spaltung von Öl-/Wasseremulsionen unter Verwendung organischer Spaltprodukte und die Verwendung dieses Verfahrens

Die Erfindung betrifft ein Verfahren zur Spaltung von Öl-/Wasseremulsionen, z.B. von abgearbeiteten Kühlschmierstoff-, Tiefzieh-, Schneid- und/oder Bohremulsionen unter Verwendung organischer Spaltprodukte sowie die Verwendung dieses Verfahrens.

Bei der Bearbeitung von metallischen Werkstoffen ist sehr häufig der Einsatz von Öl-in Wasser-Emulsionen notwendig. Diese Emulsionen dienen zum Kühlen der Werkstücke und Werkzeuge bei der spanabhebenden Metallbearbeitung, z. B. beim Schneiden, Bohren und Drehen. Bei der spanosen Metallverarbeitung, z.B. beim Tiefziehen, dienen sie als Gleit- und Trennmittel.

Diese Emulsionen bestehen in der Ölphase vorwiegend aus natürlichen oder synthetischen Ölen unterschiedlichster chemischer Zusammensetzung und Herkunft, ferner in der Öl- und Wasserphase aus Emulgatoren, Netzmitteln und anderen Hilfsstoffen. In den geschilderten Begriff der Emulsionen sollen auch die klassischen, durch Öleintrag verunreinigten alkalischen, neutralen oder sauren Entfettungs- und Reinigungsbäder einbezogen werden.

Diese Emulsionen unterliegen bei ihrer Anwendung einem Verschleiß und müssen regelmäßig oder diskontinuierlich entsorgt werden. Der wichtigste Schritt bei der Entsorgung derartiger abgearbeiteter Emulsionen ist deren Spaltung; d.h., der Ölanteil muß möglichst weitgehend von der Spaltwasserphase getrennt werden, um diese nach entsprechender Nachbehandlung ökologisch unbedenklich in die Kanalisation oder den Vorfluter ableiten zu können.

Die Spaltung mittels organischer Spaltprodukte und die Messung des optimalen Dosierendproduktes beschreibt die Patentanmeldung P 36 27 199.3 "Verfahren zur Steuerung der Spaltung von Öl-/ Wasseremulsionen". Weiterhin wird dieses Emulsionsspaltverfahren der Anmelderin und seine Vorteile gegenüber klassischen Spaltverfahren in B. Spei und V. Wehle "Wasser, Luft und Betrieb", Ausgabe 10/86, S. 62 f und loc.cit., Ausgabe 5/87, S. 20 f detailliert beschrieben.

Bei der Spaltung fällt neben der Spaltwasserphase die Altölphase an, die aus den Bearbeitungsvorgängen herrührende Fremdstoffe, z.B. Metallabrieb und Wasser, enthält. Bei den klassischen Spaltverfahren wie Salz-, Säure-, Hydroxidspaltung oder Spaltung mittels Adsorbentien, enthält die Altölphase zusätzlich durch den Spaltprozeß eingetragenen Fremdstoffe in Form von Hydroxiden oder Adsorbentien. Bei der Spaltung durch Membranverfahren, z.B. durch Ultrafiltration, fallen Retentate an, die im günstigsten Fall 50 % Wasser, üblicherweise >50 % Wasser enthalten.

Altöle aus Spaltanlagen unterliegen dem Abfallgesetz, d.h., sie sind nur mit erheblichen Kosten zu entsorgen. Das Bestreben von Spaltanlagenbetreibern geht dahin, die Entsorgungskosten möglichst zu minimieren, d.h., das Volumen des zu entsorgenden Altöls zu reduzieren. Die Altölphase sollte daher möglichst frei sein von Stoffen, die durch den Spaltprozeß eingetragen werden, wie z.B. Hydroxiden oder allgemein Fremdstoffen, und möglichst wenig Wasser enthalten.

Der Einsatz organischer Spaltprodukte gewährleistet, daß keine vom Produkt herrührenden Feststoffe in die Ölphase gelangen und durch den Spaltprozeß keine Volumenvergrößerung der zu entsorgenden Altölmengen auftritt. Darüberhinaus sind die mit organischen Spaltern erzeugten Altöle wasserärmer als die Retentate aus Ultrafiltrationsanlagen. Der Wassergehalt liegt in der Regel im Bereich von 20 bis 40 %.

Weiterhin lassen sich Altöle aus der Spaltung mit organischen Spaltprodukten deutlich besser entwässern als Retentate und Altöle aus herkömmlichen Spaltprozessen.

Dennoch erfordert auch die Entwässerung von Altölen aus der Spaltung mit organischen Produkten einen erheblichen technischen und wirtschaftlichen Aufwand. Im günstigsten Fall erfolgt die Entwässerung nach Abzug des Altöls von der Wasserphase bei Raumtemperatur rein statisch in einem separaten Behälter. Wesentlich häufiger müssen zusätzlich Entwässerungsprodukte, Temperaturen von 60 bis 90 °C und mechanische Hilfsmittel, wie Zentrifugen oder Dekanter, eingesetzt werden.

Das Aufheizen solcher Altöle ist bezüglich Wärmeaustauschermaterialien, Ablagerungs- und Reinigungs-, sowie Abluftproblemen technisch nicht gelöst.

Bei den klassischen Verfahren kann durch eine Temperaturerhöhung keine Verbesserung der Altölqualität erreicht werden, d.h. ein Altöl mit einem geringeren Wasseranteil erhalten werden. Dies ist im Folgenden in einem Vergleichsbeispiel gezeigt.

Bei der Anwesenheit von Fest- und Fremdstoffen in der Altölphase treten zusätzliche Probleme im Bereich der mechanischen Entwässerungshilfen auf, z.B. Separatoren-, Dekanterverschleiß, ungenügende Trennung der Öl-, Feststoff- und Wasserphasen.

Der vorliegenden Erfindung liegt die Aufgabe zugrunde, ein Verfahren zum Spalten von Öl-/Wasseremulsionen unter Verwendung organischer Spaltprodukte, die mittels einer Regelvorrichtung in

optimaler Menge zugegeben werden, bereitzustellen, das technisch weniger aufwendig ist, kostengünstiger durchgeführt werden kann und zudem mit einem geringeren Anfall an zu entsorgenden Reststoffen betrieben werden kann als solche, wie sie aus dem Stand der Technik als klassische Spaltverfahren bekannt sind.

Diese Aufgabe wird durch die gezielte Auswahl eines bestimmten Temperaturintervalls erreicht.

Die Erfindung betrifft folglich ein Verfahren zur Spaltung von Öl-/Wasseremulsionen unter Verwendung organischer Spaltprodukte, die mittels einer Regelvorrichtung in optimaler Menge zugegeben werden, das dadurch gekennzeichnet ist, daß die Spaltungsreaktion unter Vermischen bei Temperaturen von 60 bis 90 °C durchgeführt wird.

Obgleich im gesamten erfindungsgemässen Temperaturintervall eine effektive Spaltung der Öl-/Wasseremulsion technisch möglich ist, empfiehlt es sich doch aus Kostengründen, die Spaltreaktion im unteren Bereich dieses Temperaturintervalls zu betreiben, so daß ein Temperaturintervall von 60 bis 80 °C bevorzugt ist.

Bei der Durchführung dieses erfindungsgemäßen Verfahrens ist eine Nachbehandlung des Verfahrensproduktes Altöl mittels physikalischer Trennverfahren nicht mehr notwendig, man erhält ein Altöl mit einem nur noch geringen Anteil an Wasser, so daß das erfindungsgemässe Verfahren insgesamt ökonomische und technische Vorteile bietet und das hierbei als eines der Verfahrensprodukte erhaltene Altöl einen Wassergehalt von weniger als 10 %, vorzugsweise weniger als 5 % aufweist.

Die Erfindung betrifft außerdem die Verwendung des erfindungsgemäßen Verfahrens zur Spaltung von Öl-/Wasseremulsionen, z.B. von abgearbeiteten Kühlschmierstoff-, Tiefzieh-, Schneid- und/oder Bohremulsionen.

Abb.1 zeigt den Ablauf einer Spaltung mit organischen Spaltprodukten unter Berücksichtigung der Dosierendpunktbestimmung und nachfolgender Altölentwässerung nach dem Stand der Technik.

Bei der bevorzugten erfindungsgemäßen Durchführung der Emulsions-Spaltung bei 60 bis 80 °C, wie sie Abb. 2 zeigt, kann Verfahrensteil B ab Altölsammelbehälter entfallen.

Die Erfindung wird durch die nachfolgenden Beispiele näher erläutert.

Als Beurteilungskriterien für die erhaltenen Ergebnisse wurden die Dosiermengen an Spaltprodukten, der Volumenanteil des Altölflotates, der Restölgehalt in der Spaltwasserphase und der Wassergehalt des Altöls verwendet.

Die erforderlichen Dosiermengen wurden mittels P3-ferromat$^R$ 8960 (Dosierendpunktbestimmung gemäß deutscher Patentanmeldung P 36 27 199.3), einem von der Anmelderin entwickelten Prozessor zur automatischen Emulsionsspaltung und Steuergerät für Spaltmittel-Dosierpumpten, bestimmt. Der Flotatanteil wurde in Vol.-% des Gesamtprobenvolumens gemessen.

Nach DIN 38409 H17/H18 wurden die in der Spaltwasserphase enthaltenen petroletherextratierbaren Stoffe (PE) bestimmt. Der Wassergehalt der Flotate wurde durch Erwärmung von 2 g Flotat über 20 min im Microwellenherd, beispielsweise dem Gerät Bauknecht MWO, Stufe 10, ermittelt.

Versuchsanordnung:

Ein 2 l Becherglas wurde mit jeweils 1 l der zu spaltenden Emulsion gefüllt. Über den P3-ferromat$^R$ 8960 wurde das Rührwerk eingeschaltet, nach 30 sec Rührzeit schaltete der Pe-ferromat die Produktdosierpumpe ein. Über die im Becherglas installierte Trübungsmeßsonde wurde der Spaltendpunkt gemessen. Nach Erreichen des Dosierendpunktes schaltete der P3-ferromat$^R$ 8960 die Dosierpumpe und den Rührer ab. Nach festgelegten, der Praxis entsprechenden Standzeiten erfolgt nun die Bestimmung des Flotatanteils, des PE in der Spaltwasserphase und des Wassergehalts im Flotat.

Die Versuche wurden mindestens bei 20, 60 und 80 °C durchgeführt. Die Erwärmung erfolgte jeweils vor der Produktdosierung.

Beispiel 1

Eine abgearbeitete mineralölhaltige, wassermischbare Kühlschmierstoffemulsion für die Bearbeitung von Stahl wurde nach oben beschriebener Versuchsanordnung gespalten. Als Spalter wurde ein Polyamin der allgemeinen Formel

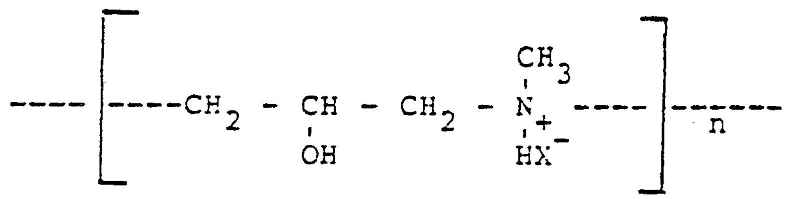

mit einem mittleren Molekulargewicht von 0,1 x 10 $^{6}$ in nachstehend beschriebenen Mengen verwendet.

Die Parameter der Versuchsdurchführung waren die folgenden:

| | |
|---|---|
| pH-Wert der unbehandelten Emulsion: | 9,1 |
| PE-Anteil der unbehandelten Emulsion: | 53 000 mg/l. |

Die nach Spaltung beim Original-pH-Wert erhaltenen Ergebnisse zeigt nachfolgende Tabelle:

| T (° C) | Dosiermenge Spaltprodukt (Vol.-%) | Flotatmenge nach 30 min (Vol.-%) | PE der Spaltwasserphase (mg/l) * | $H_2O$-Gehalt des Flotates nach 30 min (%) |
|---|---|---|---|---|
| 20 | 1,1 | 18 | 280 | 40,8 |
| 60 | 0,8 | 10 | 200 | 32,9 |
| 70 | 0,7 | 10 | 200 | 15,2 |
| 75 | 0,5 | 10 | 175 | 9,8 |
| 80 | 0,5 | 10 | 160 | 4,0 |

* nach 1 h Standzeit

Bei dieser Emulsion kann durch Spaltung bei erhöhter Temperatur (60 - 80 °C) sowohl eine deutliche Einsparung an Spaltprodukt als auch ein Flotat mit einem geringeren $H_2O$-Gehalt erzielt werden.

Beispiel 2

Das Beispiel 1 wurde wiederholt, allerdings wrude nun die Standzeit auf 3 Stunden ausgedehnt. Die Ergebnisse sind in folgender Tabelle zusammengefaßt:

| T (° C) | Dosiermenge Spaltprodukt (Vol.-%) | Flotatmenge nach 3 h (Vol.-%) | PE der Spaltwasserphase (mg/l) * | $H_2O$-Gehalt des Flotates nach 3 h Standzeit (%) |
|---|---|---|---|---|
| 20 | 1,1 | 15 | 200 | 39,0 |
| 60 | 0,8 | 8 | 140 | 14,2 |
| 80 | 0,5 | 8 | 60 | 4,0 |

* nach 3 h Standzeit

Beispiel 3

Ein mineralölhaltiges, abgearbeitetes Kühlschmierstoffgemisch aus dem Sammelbehälter einer Automobilfabrik wurde mit Hilfe der oben beschriebenen Versuchsanordnung gespalten. Als geeignetes Spaltprodukt wurde ein Polyamin der allgemeinen Formel

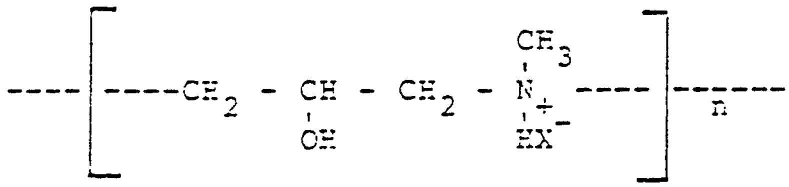

mit einem mittleren Molekulargewicht von 0,15 x $10^6$ verwendet.

Die unbehandelte Emulsion hatte folgende Werte:

| | |
|---|---|
| pH-Wert: | 8,1 |
| PE: | 20 000 mg/l. |

Die nach der Spaltung beim Original-pH-Wert erhaltenen Ergebnisse zeigt die nachfolgende Tabelle:

| T (°C) | Dosiermenge Spaltprodukt (Vol.-%) | Flotatmenge nach 60 min (Vol.-%) | PE der Spaltwasserphase (mg/l) * | $H_2O$-Gehalt des Flotates (%) | |
|---|---|---|---|---|---|
| | | | | 1h | 3h |
| | | | | Standzeit | |
| 20 | 0,65 | 10 | 90 | 22,0 | 20,8 |
| 60 | 0,65 | 10 | n.n.** | 12,9 | 9,6 |
| 80 | 0,65 | 10 | n.n. | | 4,5 |

* nach 1 h Standzeit
**nicht nachweisbar

Bei dieser Emulsion bleibt die erforderliche Spaltproduktmenge bei Temperaturerhöhung unverändert, es wird jedoch wiederum ein Wassergehalt im Altöl von <5 % erreicht.

Vergleichsbeispiel(klassische Spaltverfahren)

Die Emulsion nach Beispiel 3 wird unter Praxisbedingungen durch Ansäuern mit $H_2SO_4$ auf pH 2, Zugabe von $FeCl_3$ x $6H_2O$ und Rückneutralisation mit $Ca(OH)_2$ auf pH 8 gespalten und die Altölflotate mittels Entspannungsflotation abgetrennt. Eine Entwässerung des Flotats ist bei Raumtemperatur überhaupt nicht möglich und selbst bei 90 °C ist sie mittels Dreiphasendekanter bis jetzt nicht gelungen. Die Gesamtmenge des Altölflotates muß kostenintensiv entsorgt werden.

**Ansprüche**

1. Verfahren zur Spaltung von Öl-/Wasseremulsionen unter Verwendung organischer Spaltprodukte, die mittels einer Regelvorrichtung in optimaler Menge zugegeben werden, dadurch gekennzeichnet, daß die Spaltungsreaktion unter Vermischen bei Temperaturen von 60 °C bis 90 °C durchgeführt wird.

2. Verfahren nach Anspruch 1, dadurch gekennzeichnet, daß die Spaltungsreaktion unter Vermischen bei Temperaturen von 60 bis 80 °C durchgeführt wird.

3. Verfahren nach Anspruch 1 und 2, dadurch gekennzeichnet, daß als eines der Verfahrensprodukte ein Altöl mit einem Wassergehalt von weniger als 10 %, vorzugsweise weniger als 5 %, erhalten wird.

4. Verwendung eines Verfahrens nach Ansprüchen 1 bis 3 zur Spaltung von Öl-/Wasseremulsionen, z.B. von abgearbeiteten Kühlschmierstoffemulsionen, Tiefziehemulsionen, Schneidemulsionen und/oder Bohremulsionen.

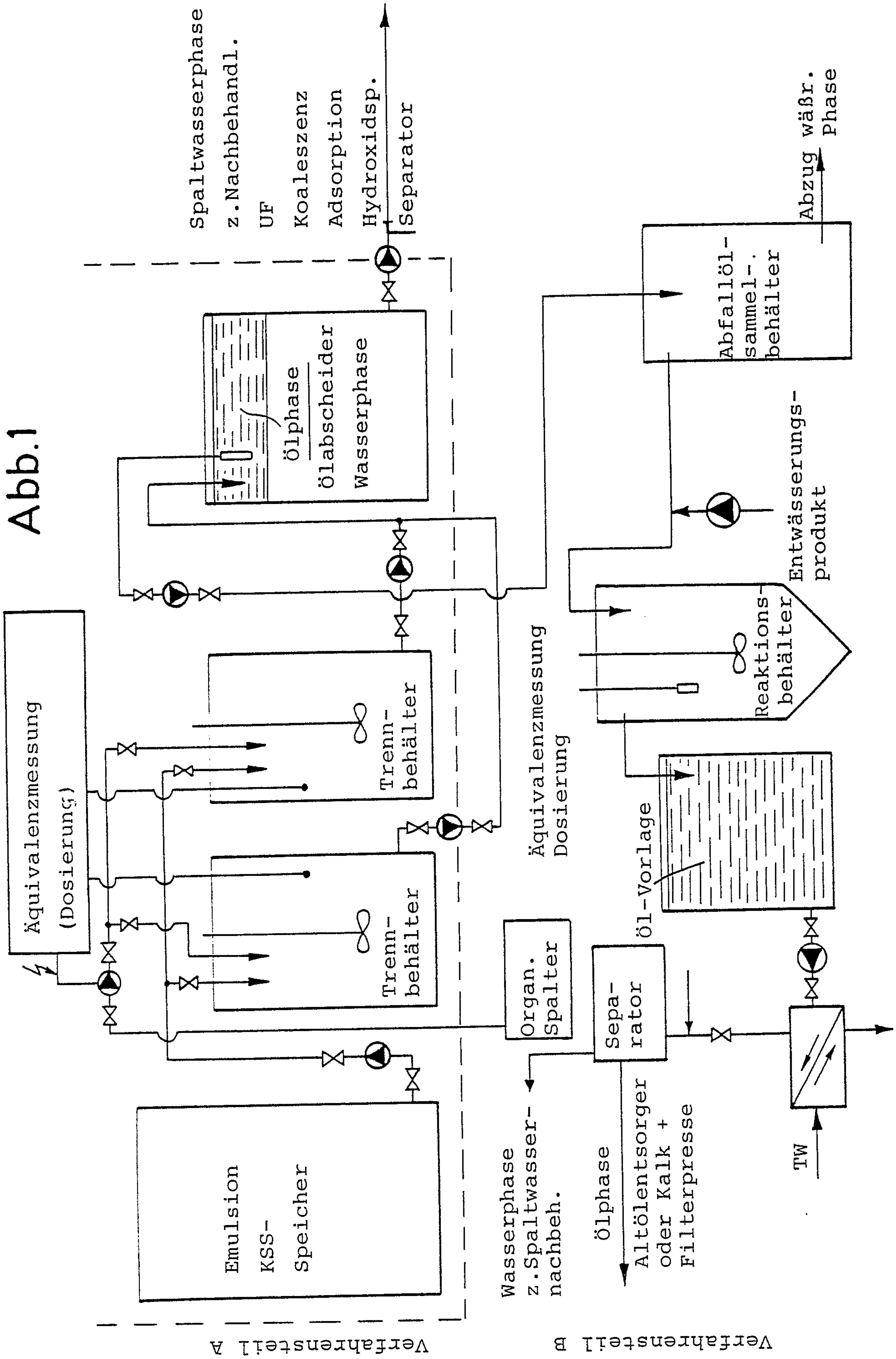
Spaltwasserphase
z.Nachbehandl.
UF
Koaleszenz
Adsorption
Hydroxidsp.
Separator
Ölphase
ölabscheider
Wasserphase
Abfallöl-
sammel-.
behälter
Abzug wäßr. Phase
Entwässerungs-
produkt
Reaktions-
behälter
Äquivalenzmessung
Dosierung
Äquivalenzmessung
(Dosierung)
Trenn-
behälter
Trenn-
behälter
Öl-Vorlage
Organ.
Spalter
Sepa-
rator
Emulsion
KSS-
Speicher
Wasserphase
z.Spaltwasser-
nachbeh.
Ölphase
Altölentsorger
oder Kalk +
Filterpresse
TW
Verfahrensteil A
Verfahrensteil B

Abb.1

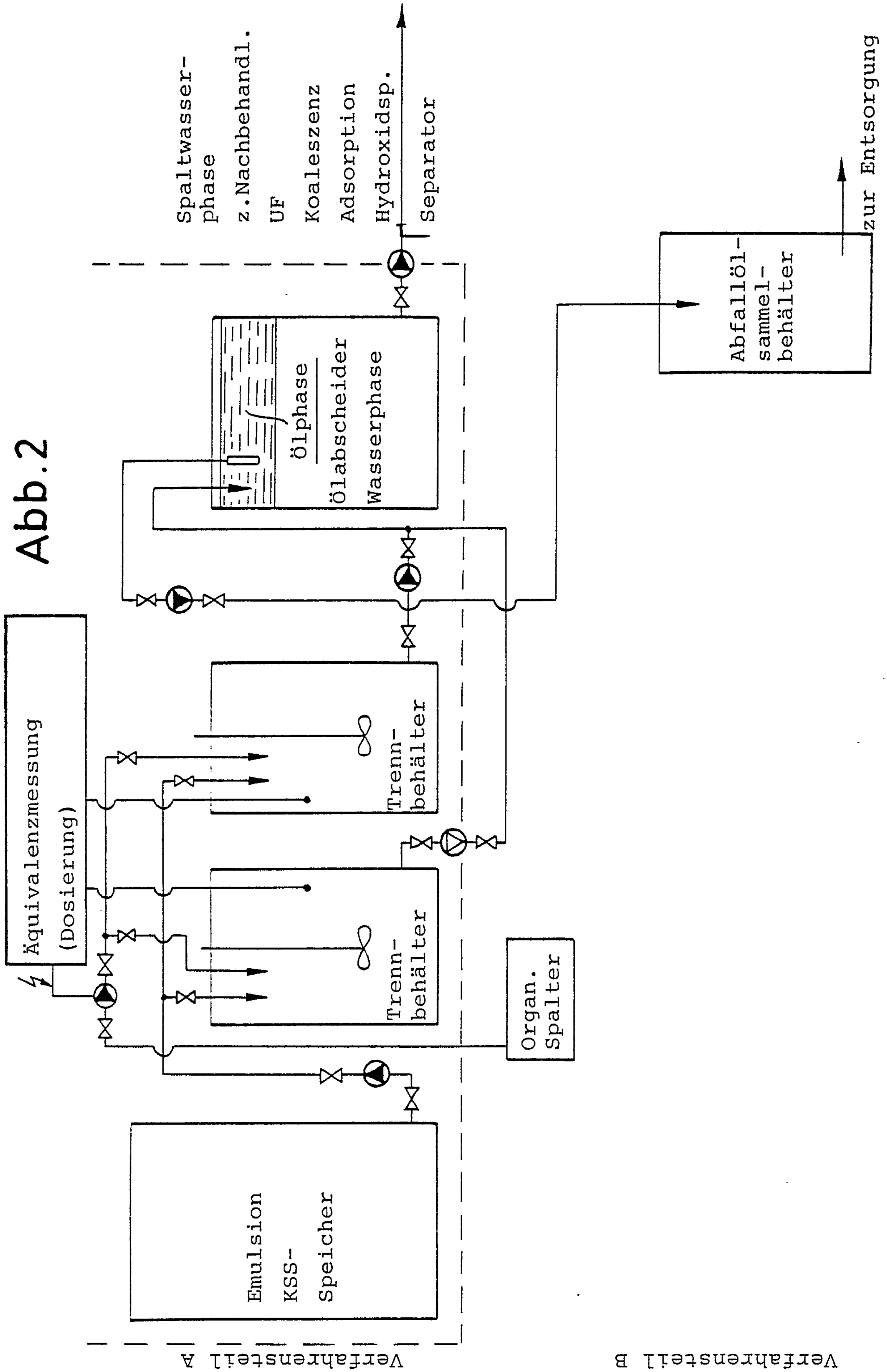
Spaltwasser-
phase
z.Nachbehandl.
UF
Koaleszenz
Adsorption
Hydroxidsp.
Separator
zur Entsorgung
Abfallöl-
sammel-
behälter
Ölphase
Ölabscheider
Wasserphase
Äquivalenzmessung
(Dosierung)
Trenn-
behälter
Trenn-
behälter
Organ.
Spalter
Emulsion
KSS-
Speicher
Verfahrensteil A
Verfahrensteil B

Abb.2

Europäisches Patentamt

# EUROPÄISCHER RECHERCHENBERICHT

Nummer der Anmeldung

EP 89 11 2117

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DD-B- 125 040 (H. ANDRACZEK et al.)<br>* Anspruch; Beispiele 1-3 *<br>--- | 1-3 | B 01 D 17/04<br>C 10 G 33/04 |
| A | DE-B-2 507 271 (F. KRUPP HUETTENWERKE AG)<br>* Ansprüche 1,4 *<br>--- | 1,2 | |
| A | EP-A-0 038 986 (BAYER AG)<br>* Ansprüche 1,5 *<br>--- | 1,2 | |
| A | DE-A-2 927 275 (DAIMLER-BENZ AG)<br>* Ansprüche 1,3; Beispiele 1-12 *<br>----- | 1,2,4 | |

RECHERCHIERTE SACHGEBIETE (Int. Cl.4)

B 01 D 17/022
B 01 D 17/04
C 10 G 33/04
C 10 G 33/06

Der vorliegende Recherchenbericht wurde für alle Patentansprüche erstellt

| Recherchenort | Abschlußdatum der Recherche | Prüfer |
|---|---|---|
| BERLIN | 24-08-1989 | KUEHN P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument